# EUROPÄISCHE PATENTSCHRIFT

(11) **EP 3 816 589 B1**
(45) Veröffentlichungstag und Bekanntmachung des Hinweises auf die Patenterteilung: **23.03.2022**
(21) Anmeldenummer: 19206427.7
(22) Anmeldetag: 31.10.2019
(51) Int. Cl.: G01F 1/32, G01F 23/28, G01N 11/16

(54) **VERFAHREN ZUR ERMITTLUNG DER FUNKTIONSFÄHIGKEIT EINES PIEZOSENSORS**
PROCESS FOR DETERMINING THE FUNCTIONALITY OF A PIEZOELECTRIC SENSOR
PROCÉDÉ DE DÉTERMINATION DE LA FONCTIONNALITÉ D'UN CAPTEUR PIEZOÉLECTRIQUE

(43) Veröffentlichungstag der Anmeldung: 05.05.2021
(73) Patentinhaber: SIKA Dr.Siebert & Kühn GmbH & Co. KG., 34260 Kaufungen (DE)
(72) Erfinder: HAUPT, Caroline, 34471 Volkmarsen (DE)
(74) Vertreter: Patentanwälte Walther Hinz Bayer PartGmbB

(56) Entgegenhaltungen:
- WO-A1-2019/058866
- DE-A1-102007 008 505
- DE-A1-102007 021 335
- DE-B1- 1 573 119
- JP-A- H0 791 992
- JP-A- 2002 031 552
- JP-A- 2002 296 084

## Beschreibung

Die Erfindung betrifft ein Verfahren zur Ermittlung der Funktionsfähigkeit eines Piezosensors.

Eine bekannte Vorrichtung zur Ermittlung der Strömungsgeschwindigkeit eines Fluids in einem Hohlkörper umfasst mindestens eine in dem Hohlkörper angeordnete Störeinrichtung, und mindestens einen in Strömungsrichtung gesehen der Störeinrichtung mit einem bestimmten Abstand nachgeordneten Sensor zur Ermittlung von Störungen, die durch die Störeinrichtung in die Strömung induziert worden sind.

Aus den drei Literaturstellen JP 2002 296084 A, JP H07 91992 A und JPJ 2002 031552 A ist bekannt, dass die Strömungsgeschwindigkeit jeweils durch eine Konstruktion gemessen wird, bei der die Ultraschallsensoren und Empfänger jeweils auf dem Umfang eines Rohrkörpers angeordnet sind, und Störungen detektieren, die innerhalb des Rohrkörpers hervorgerufen werden.

WO 2019/058866 A1 beschreibt einen Piezosensor als Teil einer Vorrichtung zur Ermittlung der Strömungsgeschwindigkeit eines Fluids gemäß dem Stand der Technik.

Üblicherweise fungieren Piezoelemente als Sensoren zur Ermittlung der Durchflussmenge innerhalb eines Rohrstücks, indem der Sensor, beispielsweise ein Piezoelement, durch die entstehenden Wirbel am Störkörper in Schwingung gerät oder verbogen wird, und hierbei eine sogenannte Piezospannung erzeugt. Das heißt, maßgeblich für die Bestimmung der Strömungsgeschwindigkeit ist die Funktionsfähigkeit des Piezosensors.

Die der Erfindung zugrundeliegende Aufgabe besteht demzufolge darin wie auf einfache Art und Weise der Piezosensor auf seine Funktionsfähigkeit überprüft werden kann und zwar nach Möglichkeit im Rahmen des Produktionsprozesses, um die Auslieferung von fehlerhaften Vorrichtungen beispielsweise zur Ermittlung der Strömungsgeschwindigkeit zu verhindern. Zur Lösung der Aufgabe wird erfindungsgemäß vorgeschlagen, dass der Piezosensor Teil einer Vorrichtung zur Ermittlung der Strömungsgeschwindigkeit eines Fluids in einem Hohlkörper ist, wobei die Vorrichtung mindestens eine in dem Hohlkörper angeordnete Störeinrichtung umfasst, sowie den einen in Strömungsrichtung gesehen der Störeinrichtung mit einem bestimmten Abstand nachgeordneten Piezosensor zur Ermittlung von Störungen, die durch die Störeinrichtung in die Strömung induziert worden sind, wobei der Piezosensor durch einen Erreger impulsartig in Schwingung versetzt wird, der Signalverlauf der Schwingung während der Abklingzeit ermittelt wird und mit einer Referenzkurve verglichen wird, die dem Signalverlauf während der Abklingzeit eines funktionsfähigen Piezosensors entspricht. Somit wird der Piezosensor durch einen Erreger bei nicht mit einem Fluid gefüllten Hohlkörper in Schwingung versetzt. Der Piezosensor schwingt dann mit abnehmender Amplitude mit seiner Eigenfrequenz aus, wenn er weder weiter angeregt noch gedämpft wird. Das heißt, nachdem der Piezosensor durch einen entsprechenden Impuls oder mehrere aufeinanderfolgende Impulse in Schwingung versetzt worden ist, vollzieht der Piezosensor eine Schwingung mit abklingender Amplitude, wobei die Schwingung mit der Eigenfrequenz des Piezosensors ausgeführt wird. Der Erreger kann elektrisch oder mechanisch ausgebildet sein.

Da die Eigenfrequenz des funktionsfähigen Piezosensors als Referenzfrequenz bekannt ist, lässt sich aus etwaigen Abweichungen der Eigenfrequenz von der Referenzfrequenz während der Abklingzeit darauf schließen, dass der Sensor nicht mehr funktionsfähig ist, beispielsweise also gebrochen ist. Das heißt, der Signalverlauf eines Piezosensors, der auf seine Funktionsfähigkeit überprüft werden soll, wird während der Abklingzeit erfasst, beispielsweise durch einen Messschrieb, um dann beispielsweise anhand des Messschriebs des Signalverlaufs eines funktionsfähigen Piezosensors durch Vergleich auf die Funktionsfähigkeit des zu überprüfenden Piezosensors zu schließen.

Das heißt, das erfindungsgemäße Verfahren zur Ermittlung der Funktionsfähigkeit eines Piezosensors zeichnet sich dadurch aus, dass der Piezosensor in Schwingung versetzt wird, der Signalverlauf der Schwingung während der Abklingzeit ermittelt wird, und mit einer Referenzkurve verglichen wird, die dem Signalverlauf während der Abklingzeit eines funktionsfähigen Piezosensors entspricht.

Weitere vorteilhafte Merkmale und Ausgestaltungen der Erfindung ergeben sich aus den Unteransprüchen.

So ist insbesondere vorgesehen, dass der Piezosensor durch einen Erregerschwingkreis in Schwingung versetzbar ist.

Im Einzelnen ist vorgesehen, dass der Erregerschwingkreis den Piezosensor nach Bestromung kapazitiv in Schwingung versetzt. Ein mechanischer Erreger oder Impulsgeber, um den Piezosensor in Schwingung zu versetzen, kann sich als Stempel darstellen, der in einmaligen oder periodischen Kontakt mit dem Piezosensor bringbar ist. Alsdann wird mit dem bekannten Messschwingkreis, der schlussendlich dem Erregerschwingkreis in seinem Aufbau entspricht, der Signalverlauf während der Abklingzeit ermittelt. Das heißt, der Erregerschwingkreis und der Messschwingkreis für den Piezosensor sind im Aufbau gleich. Das heißt also, um den Piezosensor zum Funktionstest in Schwingung zu versetzen, wird der Messschwingkreis bestromt, er ist dann der Erregerschwingkreis, dann wird aus dem Erregerschwingkreis der Messschwingkreis, wenn nämlich während der Abklingzeit der Signalverlauf ermittelt wird.

Anhand der Zeichnungen wird die Erfindung nachstehend beispielhaft näher erläutert.
- Figur 1: zeigt schematisch eine Vorrichtung zur Ermittlung der Strömungsgeschwindigkeit;
- Figur 2: zeigt schematisch den Erregerschwingungskreis, um den Piezosensor kapazitiv in Schwingung zu versetzen bzw. um den Signalverlauf während der Abklingzeit zu ermitteln;
- Figur 3: zeigt beispielhaft das Erregersignal, mit welchem der Piezosensor beaufschlagt wird;
- Figur 4: zeigt den Signalverlauf am Piezosensor während der Abklingzeit.

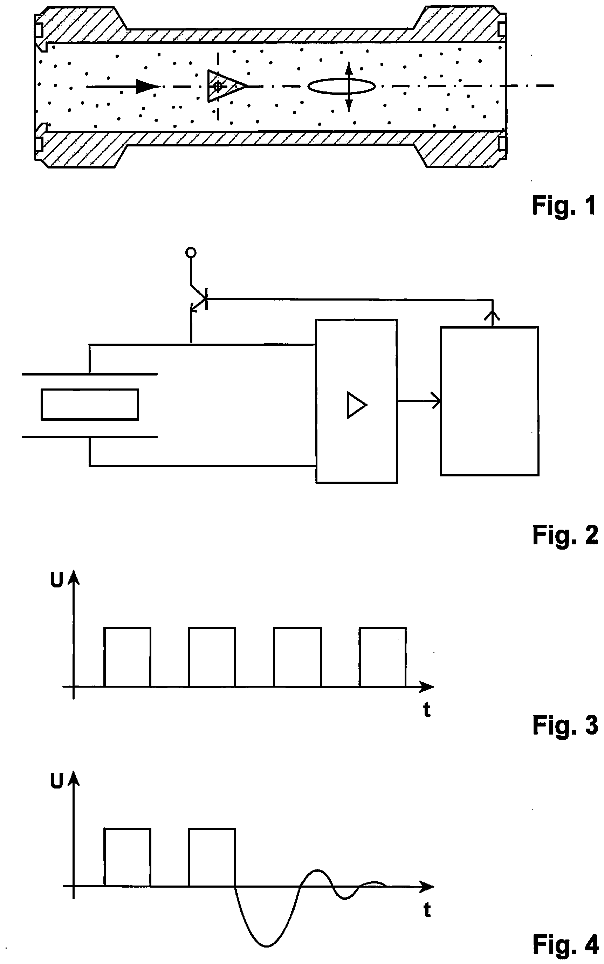

Figur 1 lässt ein Rohr 1 erkennen, in dem ein Störkörper 2 angeordnet ist, der Wirbel in der Strömung erzeugt. Dem Störkörper 2 in Strömungsrichtung (Pfeil 4) nachgeordnet ist der Piezosensor 3, der durch die durch den Störkörper erzeugten Wirbel in Schwingung versetzt wird.

Figur 2 zeigt den Erregerschwingungskreis zur Erzeugung einer Erregerschwingung mit der Eigenfrequenz des Piezosensors. Die Erregung des Piezosensors erfolgt kapazitiv.

Aus den Figuren 3 und 4 ist die Erregerschwingung erkennbar (Fig. 3), sowie der Signalverlauf während der Abklingzeit (Fig. 4).

## Patentansprüche

1. Verfahren zur Ermittlung der Funktionsfähigkeit eines Piezosensors (3),
wobei der Piezosensor (3) Teil einer Vorrichtung zur Ermittlung der Strömungsgeschwindigkeit eines Fluids in einem Hohlkörper ist, wobei die Vorrichtung mindestens eine in dem Hohlkörper angeordnete Störeinrichtung umfasst
sowie den einen in Strömungsrichtung gesehen der Störeinrichtung mit einem bestimmten Abstand nachgeordneten Piezosensor (3) zur Ermittlung von Störungen, die durch die Störeinrichtung in die Strömung induziert worden sind,
wobei der Piezosensor (3) durch einen Erreger impulsartig in Schwingung versetzt wird,
der Signalverlauf der Schwingung während der Abklingzeit ermittelt wird und mit einer Referenzkurve verglichen wird, die dem Signalverlauf während der Abklingzeit eines funktionsfähigen Piezosensors entspricht.

2. Verfahren nach Anspruch 1,
**dadurch gekennzeichnet,**
**dass** der Piezosensor (3) durch einen elektrischen oder mechanischen Erreger in Schwingung versetzbar ist.

3. Verfahren nach einem der Ansprüche 1 oder 2,
**dadurch gekennzeichnet,**
**dass** der Erreger als Erregerschwingkreis ausgebildet ist, durch den der Piezosensor (3) kapazitiv in Schwingung versetzbar ist.

4. Verfahren nach einem der voranstehenden Ansprüche 1 oder 2,
**dadurch gekennzeichnet,**
**dass** der Erreger, um den Piezosensor (3) in Schwingung zu versetzen, als den Piezosensor (3) anstoßender Impulsgeber ausgebildet ist.

## Claims

1. A method of determining the functioning of a piezoelectric sensor (3),
wherein the piezoelectric sensor (3) is part of a device for determining the flow rate of a fluid in a hollow body;
wherein the device comprises at least one baffle arranged in the hollow body;
and the piezoelectric sensor (3) arranged at a certain distance downstream of the baffle viewed in the direction of flow for the determination of disturbances that have been induced into the flow by the baffle;
and wherein the piezoelectric sensor (3) is set to vibrate in a pulsed manner by an exciter,
the signal sequence of the vibration during the decay time is determined and is compared with a reference curve that corresponds to the signal sequence during the decay time of a functioning piezoelectric sensor.

2. A method in accordance with claim 1,
**characterized in that**
the piezoelectric sensor (3) can be set to vibrate by an electrical or mechanical exciter.

3. A method in accordance with claim 1 or claim 2,
**characterized in that**
the exciter is configured as an exciter resonant circuit by which the piezoelectric sensor (3) can be capacitively set to vibrate.

4. A method in accordance with one of the preceding claims 1 or 2, **characterized in that**
the exciter is configured as a pulse generator initiating the piezoelectric sensor (3) to set the piezoelectric sensor (3) to vibrate.

## Revendications

1. Procédé de détermination de la fonctionnalité d'un capteur piézoélectrique (3), dans lequel
le capteur piézoélectrique (3) fait partie d'un dispositif de détermination de la vitesse d'écoulement d'un fluide dans un corps creux,
le dispositif comprenant au moins un moyen de perturbation disposé dans le corps creux
ainsi que le capteur piézoélectrique (3) disposé, vu dans la direction d'écoulement, à une distance définie en aval du moyen de perturbation, pour la détermination de perturbations qui ont été induites dans l'écoulement par le moyen de perturbation,
le capteur piézoélectrique (3) étant mis en oscillation par impulsions par un excitateur,
la variation du signal de l'oscillation pendant le temps de descente étant déterminée et étant comparée à une courbe de référence qui correspond à la variation du signal pendant le temps de descente d'un capteur piézoélectrique fonctionnel.

2. Procédé selon la revendication 1,
**caractérisé en ce que**
le capteur piézoélectrique (3) peut être mis en oscillation par un excitateur électrique ou mécanique.

3. Procédé selon l'une des revendications 1 ou 2,
**caractérisé en ce que**
l'excitateur est réalisé sous la forme d'un circuit résonnant excitateur, par lequel le capteur piézoélectrique (3) peut être mis en oscillation de manière capacitive.

4. Procédé selon l'une des revendications précédentes 1 ou 2,
**caractérisé en ce que**
l'excitateur, pour faire osciller le capteur piézoélectrique (3), est réalisé sous la forme d'un générateur d'impulsions venant heurter le capteur piézoélectrique (3).
